# EUROPÄISCHE PATENTSCHRIFT

(11) **EP 0 940 134 B1**
(45) Veröffentlichungstag und Bekanntmachung des Hinweises auf die Patenterteilung: **07.07.2004**
(21) Anmeldenummer: 99103758.1
(22) Anmeldetag: 26.02.1999
(51) Int. Cl.: A61G 7/10

(54) **Personenlifter mit Sicherung gegen ein unzulässiges Abrollen eines Gurtelementes**
Lift for persons with security device against an inadmissible unrolling of a belt element
Dispositif élévateur pour personnes avec système de sécurité contre un déroulememt inadmissible d'un élément de sangle

(30) Priorität: 02.03.1998 DE 29803558 U
(43) Veröffentlichungstag der Anmeldung: 08.09.1999
(73) Patentinhaber: HORCHER GmbH, D-61130 Nidderau (DE)
(72) Erfinder: Horcher, Stefan, 61137 Schöneck (DE)
(74) Vertreter: Stoffregen, Hans-Herbert, Dr. Dipl.-Phys.

(56) Entgegenhaltungen:
- CH-A- 362 795
- DE-A- 4 000 831
- DE-C- 3 802 775

## Beschreibung

Die Erfindung bezieht sich auf einen Personenlifter wie Deckenlifter oder Bodenlifters mit Halterung zum Transportieren einer insbesondere behinderten Person, umfassend ein Gurtelement, das zum Auf- bzw. Abwickeln von einer Welle ausgeht und über das die Halterung anheb- und absenkbar ist, wobei die Welle mit einem ersten Zahnrad verbunden ist, sowie eine Sicherung gegen ein unzulässiges Abrollen des Gurtelementes.

Um insbesondere behinderte Personen innerhalb vorzugsweise geschlossener Räume von einem Ort zu einem anderen Ort zu transportieren, können diese mittels eines Lifters - sei es Deckenlifter, sei es Bodenlifter - transportiert werden. Dabei geht von dem Lifter ein Gurt aus, der mit z. B. einem Sitz wie Sitztuch zur Aufnahme der Person verbunden ist.

Die entsprechenden Gurte werden mittels Elektromotoren von einer Welle abgerollt bzw. auf diese aufgerollt. Hierzu geht von der Abtriebswelle eines Elektromotors eine mit einem Zahnrad kämmende Welle aus, die wiederum über ein Übersetzungsgetriebe die Welle antreibt. Sofern die Abtriebswelle von dem kämmenden Rad zum Beispiel durch Abnutzung von Zähnen nicht mehr den erforderlichen Form- bzw. Kraftschluss sicherstellt, besteht die Gefahr, dass bei angehobener Person diese mit einer unzulässigen Geschwindigkeit absinkt, so dass die Gefahr von Verletzungen erwächst.

Aus der DE 195 44 056 A1 ist ein Personen-Hebegerät bekannt, bei dem bei Versagen des Transportgurtes ein Fanggurt wirksam wird, wodurch bei unzulässiger Sinkgeschwindigkeit eine Arretierung erfolgt.

Aus der DE 40 00 831 A1 ist eine Lastsicherung für eine Krananlage bekannt. Um bei unzulässiger Sinkgeschwindigkeit eines Tragelementes ein weiteres Absenken zu unterbinden, ist ein Lasthaken bzw. eine Lastflasche mit einem Sicherheitstragmittel verbunden, das über ein Kettentaschenrad geführt wird. Entlang einer Seite des Kettentaschenrades verläuft ein Fangklotz, zwischen dem und dem Kettentaschenrad dann ein Bremskeil einführbar ist, wenn die Sinkgeschwindigkeit einen unzulässigen Wert überschreitet.

Der vorliegenden Erfindung liegt das Problem zu Grunde, einen Personenlifter der eingangs genannten Art derart weiterzubilden, dass mit konstruktiv einfachen Maßnahmen sichergestellt ist, dass bei unzulässiger Abrollgeschwindigkeit des Gurtes ein Arretieren der Welle erfolgt, so dass eine Gefährdung einer zu transportierenden Person unterbleibt.

Erfindungsgemäß wird das Problem dadurch gelöst, dass das erste Zahnrad mit einem zweiten Zahnrad kämmt und dass ein Sperrelement dem ersten und dem zweiten Zahnrad im Bereich deren Eingriffs derart zugeordnet ist, dass das Sperrelement zwischen das erste und das zweite Zahnrad bei unzulässiger Sinkgeschwindigkeit der Halterung schiebbar ist.

Dabei ist das Sperrelement vorzugsweise zahnradseitig keilförmig ausgebildet und mit seiner Spitze kraftbeaufschlagt zwischen die kämmenden Zahnräder schiebbar. Hierzu kann das Sperrelement mit einem Anker eines Magneten verbunden bzw. von diesem bewegbar sein. Der Magnet selbst ist in Abhängigkeit von der Umdrehungsgeschwindigkeit der Welle bzw. deren Drehzahl zum Verschieben des Sperrelementes aktivierbar. Die Drehzahl der Welle selbst kann über einen Impulszähler gemessen werden, um sodann den Magnet zu aktivieren.

Um ein wirksames Blockieren der kämmenden Zahnräder, von denen eines unmittelbar mit der Welle verbunden ist, zu bewirken, ist nach einer Weiterbildung der Erfindung vorgesehen, dass das vorzugsweise spitzenseitig keilförmig ausgebildete Sperrelement zumindest auf einer mit einer der Zahnräder wechselwirkenden Seite strukturiert ist. Hierbei ist bevorzugter Weise eine Geometrie gewählt, die der des kämmenden Zahnrades entspricht.

Durch die erfindungsgemäße Lehre wird das Sperrelement zwischen die kämmenden Zahnräder in dem Moment bewegt, in dem die das Gurtelement aufnehmende Welle eine unzulässig hohe Drehgeschwindigkeit aufweist, die ansonsten zu einem Ablassen eines Sitzes führen würde, was zu einer Gefährdung einer Person führen könnte. Dabei wird das mit den kämmenden Zahnrädern wechselwirkende Sperrelement quasi zwischen die Zahnräder hineingezogen, wodurch ein automatisches Blockieren der Zahnräder und damit ein Stillstand der Welle erfolgt.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von der Zeichnung zu entnehmenden bevorzugten Ausführungsbeispielen.

Es zeigen:
- Fig. 1: einer Welle eines Lifters zugeordnete kämmende Zahnräder und
- Fig. 2: einen Ausschnitt eines Patientendeckenlifters.

Bekannte Decken- oder Bodenlifter zum Transportieren von Personen weisen einen auf eine nicht dargestellte Welle aufwickelbaren bzw. von dieser abwickelbaren Gurt auf, von dem wiederum ein Sitz bzw. ein Sitzgurt für die Person ausgeht. Alternativ kann über den Gurt eine Halterung oder ein Gehäuse angehoben bzw. abgesenkt werden, von dem der Sitz bzw. Sitzgurt ausgeht. Durch diese Maßnahmen besteht die Möglichkeit, die Person von einem Ort zum anderen zu befördern, wobei während des Transportes der Sitz in angehobener Position verläuft. Die Welle selbst wird mittels eines Elektromotors, vorzugsweise batteriebetriebenen Elektromotors, in Drehbewegung versetzt, wobei zwischen Abtriebswelle des Motors und der Welle selbst Übersetzungsgetriebe vorhanden sind. Dabei ist die Welle mit einem Zahnrad verbunden, welches unmittelbar mit einem weiteren Zahnrad kämmt, welches seinerseits zum Beispiel mit der Antriebswelle des Elektromotors wechselwirkt.

Um sicherzustellen, dass eine unzulässig hohe Umdrehungsgeschwindigkeit der Welle, welches ein unzulässig schnelles Ablassen des Gurtes zur Folge hätte, unterbunden wird, ist erfindungsgemäß vorgesehen, dass die Welle in Abhängigkeit von deren Umdrehungsgeschwindigkeit blockierbar ist.

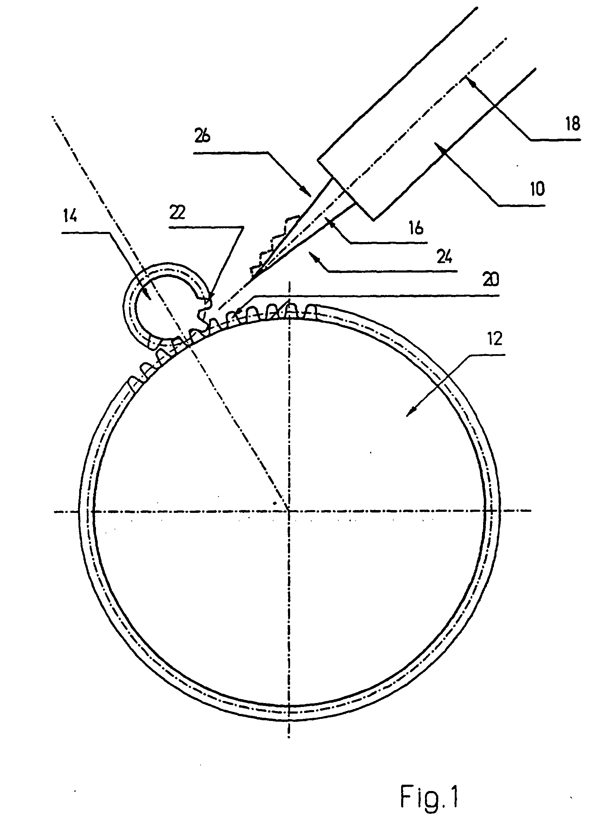

Hierzu ist nach dem Ausführungsbeispiel der Fig. 1 ein zum Beispiel über einen nicht dargestellten Elektromagneten betätigbares Sperrelement 10 vorgesehen, welches dann zwischen zwei kämmende Zahnräder 12, 14 verschiebbar ist, wenn das unmittelbar mit der Welle verbundene Zahnrad, im Ausführungsbeispiel das Zahnrad 12, eine unzulässig hohe Umdrehungsgeschwindigkeit aufweist, die zum Beispiel mittels eines Impulszählers bestimmt werden kann. Das Zahnrad 14 selbst kann mittelbar oder unmittelbar mit der Abtriebswelle eines Elektromotors verbunden sein. Selbstverständlich kann das mit der Welle verbundene Zahnrad 12 auch über ein weiteres Zahnrad angetrieben werden.

Das Sperrelement 10 weist ein spitz zulaufendes vorderes Ende 16 auf, welches in den Wirkungsbereich zwischen den Zähnen 12, 14 entlang der Geraden 18 verschiebbar ist, wenn aufgrund einer unzulässig hohen Umdrehungsgeschwindigkeit der Magnet aktiviert und somit das Sperrelement 10 in Richtung der Zahnräder 12, 14 verstellt wird. Durch die keilförmig ausgebildete Spitze 16 wird das Sperrelement beim Erfassen von den Zähnen 20, 22 der Zahnräder 12, 14 zwischen diese hineingezogen, wodurch eine Unverdrehbarkeit der Zahnräder 12,1 4 hervorgerufen wird mit der Folge, dass die von dem Zahnrad 12 ausgehende Welle zum Stillstand gelangt.

Sind im Ausführungsbeispiel der Fig. 1 die den Zähnen 20, 22 zugewandten Seiten 24, 26 des keil- bzw. rampenförmigen Spitzenbereichs 16 des Sperrelementes 18 glatt ausgebildet, so besteht die Möglichkeit, eine oder beide Flächen 24, 26 zu strukturieren, wodurch ein Erfassen von einem der Zahnräder 12, 14 und damit ein Hineinziehen des Sperrelementes 18 zwischen diese erleichtert wird.

Aus der Darstellung der Fig. 1 ergibt sich des Weiteren, dass die Längsachse 18 des Sperrelementes 18, die mit der Bewegungsrichtung zusammenfällt, senkrecht oder in etwa senkrecht die Verbindungslinie zwischen dem Mittelpunkt des Zahnrades 12 und dem Wirkbereich mit dem Zahnrad 14 schneidet.

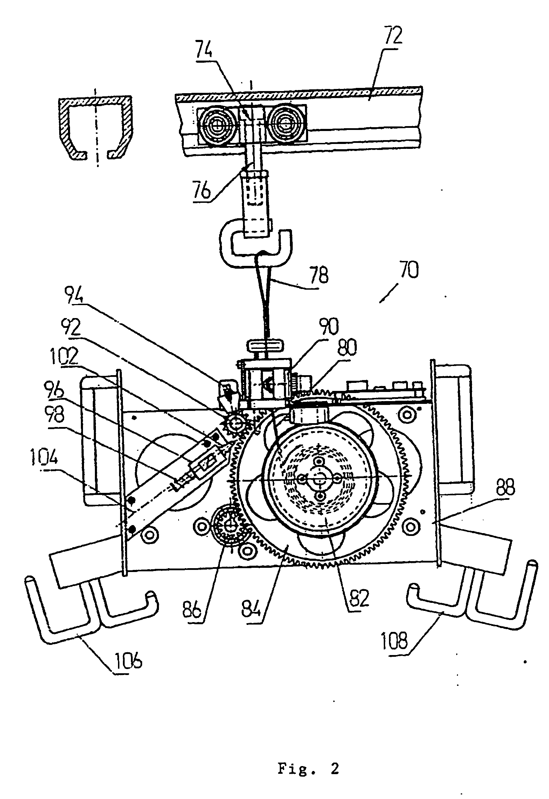

In Fig. 2 ist im Ausschnitt ein Personendeckenlifter 70 dargestellt, mittels dessen eine behinderte Person von einem Ort zu einem anderen verfahren und abgelassen bzw. angehoben werden kann. Hierzu verläuft an einer nicht näher bezeichneten Decke ein Träger 72, entlang dem vorzugsweise ein batterieangetriebener Läufer 74 verfahrbar ist. Der Läufer 74 weist einen Haken 76 auf, in den eine Schlaufe 78 eines Gurtes 80 einhängbar ist, der seinerseits auf eine Welle 82 oder Rolle auf- bzw. von dieser abwickelbar ist. Hierzu ist die Welle 82 mit einem Zahnrad 84 verbunden, welches über ein Antriebsritzel 86 in Drehbewegung versetzt wird, um also den Gurt 80 auf die Welle 82 aufzuwickeln bzw. von dieser abzulassen. Das Ritzel 86 wird dabei von einem Elektromotor, vorzugsweise einem batteriebetriebenen Motor in Drehbewegung versetzt.

Die zuvor bezeichneten Elemente sind in einem Gehäuse 88 angeordnet, von dem Halterungen oder Befestigungen 106, 108 ausgehen, in die in gewohnter Weise Gurte oder Sitze einhängbar sind, um Personen aufzunehmen.

Der Gurt 80 durchsetzt das Gehäuse 88 über eine Öffnung, der eine Schlaffseilsicherung 90 entsprechend der Lehre des DE 91 10 218 U1 zugeordnet ist. Hierdurch wird überprüft, ob der Gurt 80 in erforderlichem Umfang gespannt ist. Trifft dies nicht zu, so wird mittels der Schlaffseilsicherung 90 der Antrieb und damit ein Drehen des Ritzels 86 unterbrochen.

Mit dem Zahnrad 84 kämmt des Weiteren ein Ritzel 82, welches dem mit dem Bezugszeichen 14 versehenen Ritzel gemäß Fig. 1 entspricht. Über einen Impulszähler 94, der als Lichtschranke ausgebildet sein kann, wird die Drehgeschwindigkeit des Ritzels 92 überwacht. Wird entsprechend dem Ausführungsbeispiel der Fig. 1 eine zu hohe Impulszahl und damit Umdrehungsgeschwindigkeit des Ritzels 92 festgestellt, wird ein Signal fiir einen Elektromagneten 96 ausgelöst, so dass dessen Stößel 98 mit seinem vorderen als Sperrelement ausgebildeten Ende 102 oder einem entsprechenden mit dem Stößel verbundenen Element in den Bereich zwischen den kämmenden Zahnrädern 84, 92 gelangt, wodurch das Sperrelement 102 zwischen die Zahnräder 84, 92 mit der Folge hineingezogen wird, dass ein weiteres Drehen dieser unterbleibt.

Der Elektromagnet 96 ist auf einer Montageplatte 104 befestigt. Ferner ist erkennbar, dass der Stößel 98 von einer Schraubenfeder 100 umgeben ist, die an dem Gehäuse des Magneten 96 abgestützt ist. Somit kann das von dem Stößel 98 ausgehende Sperrelement 102, d. h. die Spitze, nur dann in den Bereich zwischen die Zahnräder 84, 92 bewegt werden, wenn der Magnet 96 im erforderlichen Umfang erregt wird.

Auf dem Gehäuse 88 selbst ist des Weiteren eine Steuerplatine angeordnet, über die u. a. eine Auswertung der Signale des Impulszählers 94 und somit eine Ansteuerung des Magneten 96 erfolgt sowie der Antrieb für die Welle 82 gesteuert wird.

## Patentansprüche

1. Personenlifter wie Deckenlifter oder Bodenlifter, mit Halterung zum Transportieren einer insbesondere behinderten Person, umfassend ein Gurtelement (80), das zum Auf- bzw. Abwickeln von einer Welle ausgeht und über das die Halterung anhebund absenkbar ist, wobei die Welle mit einem ersten Zahnrad (12, 84) verbunden ist, sowie eine Sicherung gegen ein unzulässiges Abrollen des Gurtelementes,
**dadurch gekennzeichnet,**
**dass** das erste Zahnrad (12, 84) mit einem zweiten Zahnrad (14, 92) kämmt und dass ein Sperrelement (10, 102) dem ersten und dem zweiten Zahnrad im Bereich deren Eingriffs derart zugeordnet ist, dass das Sperrelement zwischen das erste und das zweite Zahnrad bei unzulässiger Sinkgeschwindigkeit der Halterung schiebbar ist.

2. Personenlifter nach Anspruch 1,
**dadurch gekennzeichnet,**
**dass** das Sperrelement (10, 102) zumindest zahnradseitig keilförmig ausgebildet ist und mit seiner Spitze kraftbeaufschlagt zwischen die kämmenden Zahnräder (12, 14, 84, 92) schiebbar ist.

3. Personenlifter nach zumindest Anspruch 1,
**dadurch gekennzeichnet,**
**dass** das Sperrelement (10, 102) mit einem Anker (98) eines Magneten (96) verbunden ist bzw. von diesem bewegbar ist und dass der Magnet insbesondere in Abhängigkeit von der Umdrehungsgeschwindigkeit der Welle (82) bzw. deren Drehzahl zum Verschieben des Sperrelementes aktivierbar ist, wobei die Drehzahl der Welle insbesondere über einen Impulszähler messbar ist.

4. Personenlifter nach zumindest Anspruch 1,
**dadurch gekennzeichnet,**
**dass** das Sperrelement (10) zumindest auf einer mit einem der Zahnräder (12, 14) wechselwirkenden Seite strukturiert ist, die vorzugsweise eine Geometrie aufweist, die der des mit der strukturierten Seite (24, 26) des Sperrelementes (14) wechselwirkenden Zahnrades (12, 14) entspricht.

5. Personenlifter nach zumindest Anpruch 1,
**dadurch gekennzeichnet,**
**dass** das Sperrelement (10, 102) zwischen die kämmenden Zahnräder (12, 14, 84, 92) zum Blockieren dieser hineinziehbar ist.

6. Personenlifter nach zumindest Anspruch 1,
**dadurch gekennzeichnet,**
**dass** das Sperrelement (10) entlang einer Geraden (18) zwischen die Zahnräder (12, 14, 84, 92) verschiebbar ist, die senkrecht eine die Achsen der Zahnräder verbindende Gerade schneidet.

## Claims

1. Lift for persons such as overhead lift or bottom lift with holding device for transporting in particular a handicapped person, comprising a belt element (80) originating from a shaft for winding up and off, respectively, and via which the holding device is liftable and lowerable, where the shaft is connected with a first gear wheel (12, 84), and a securing device against impermissible unreeling of the belt element,
**characterized in**
**that** the first gear wheel (12, 84) meshes with a second gear wheel (14, 92) and that a latching element (10, 102) is assigned such to the first and second gear wheel in their gearing region, that the latching element can be pushed between the first and the second gear wheel at impermissible settling speed of the holding device.

2. Lift for persons according to claim 1,
**characterized in**
**that** the latching element (10, 102) is wedge-shaped, at least on the gear wheel side, and when acted upon by force it can be pushed with its tip in between the meshing gear wheels (12, 14, 84, 92).

3. Lift for persons according to claim 1,
**characterized in**
**that** the latching element (10, 102) is connected to or movable by an armature (98) of a magnet (96), and that the magnet is activatable in particular in dependence on the rotational speed of the shaft (82) and its rpm, respectively, in order to displace the latching element, where the rpm of the shaft particularly can be measured via a pulse counter.

4. Lift for persons according to claim 1,
**characterized in**
**that** the latching element (10) is structured at least on a side interacting with one of the gear wheels (12, 14) and preferably having a geometry corresponding to that of the gear wheel (12, 14) interacting with the structured side (24, 26) of the latching element (14).

5. Lift for persons according to claim 1,
**characterized in**
**that** the latching element (10, 102) is pullable in between the meshing gear wheels (12, 14, 84, 92) in order to block them.

6. Lift for persons according to claim 1,
**characterized in**
**that** the latching element (10) is displaceable along a straight line (18) between the gear wheels (12, 14, 84, 92) that vertically intersects a straight line connecting the axes of the gear wheels.

## Revendications

1. Lève-personne, tel qu'un lève-personne sur rail au plafond ou un lève-personne mobile au sol, avec support pour le transport d'une personne en particulier handicapée, comprenant une sangle (80) partant d'un arbre de rotation pour l'enroulement ou le déroulement grâce à laquelle le support peut être élevé ou descendu, sachant que l'arbre de rotation est relié à une première roue dentée (12, 84) tout comme l'est une sécurité contre un déroulement non désiré de la sangle,
**caractérisé en ce que**
la première roue dentée (12, 84) s'engrène dans une deuxième roue dentée (14, 92) et qu'un élément de blocage (10, 102) est conjugué à la première et à la deuxième roue dentée au niveau de leur engrenage de manière que l'élément de blocage peut être poussé entre la première et la deuxième roue dentée en cas de vitesse d'abaissement excessive du support.

2. Lève-personne selon la revendication 1,
**caractérisé en ce que**
l'élément de blocage (10, 102) est conçu de manière cunéiforme au moins du côté des roues dentées et peut, au moyen d'une force, être poussé avec son extrémité entre les deux roues dentées s'engrenant (12, 14, 84, 92).

3. Lève-personne selon au moins la revendication 1,
**caractérisé en ce que**
l'élément de blocage (10, 102) est relié au noyau (98) d'un aimant (96) ou plus précisément peut être mis en mouvement par celui-ci et que l'aimant est activé, pour la poussée de l'élément de blocage, en particulier en fonction de la vitesse de rotation de l'arbre (82) ou de son nombre de tours, sachant que le nombre de tours de l'arbre peut être en particulier mesuré au moyen d'un compteur d'impulsions.

4. Lève-personne selon au moins la revendication 1,
**caractérisé en ce que**
l'élément de blocage (10) est structuré au moins sur une face en interaction avec une des roues dentées (12, 14) qui présente de préférence une géométrie correspondant à celle de la roue dentée (12, 14) en interaction avec la face structurée (24, 26) de l'élément de blocage (14).

5. Lève-personne selon au moins la revendication 1,
**caractérisé en ce que**
l'élément de blocage (10, 102) peut être poussé entre les deux roues dentées s'engrenant (12, 14, 84, 92) afin de les bloquer.

6. Lève-personne selon au moins la revendication 1,
**caractérisé en ce que**
l'élément de blocage (10) peut être poussé entre les roues dentées (12, 14, 84, 92) le long d'une droite (18) qui coupe perpendiculairement une droite reliant les axes des roues dentées.
